## Europäisches Patentamt
## European Patent Office
## Office européen des brevets

(19)

(11) Veröffentlichungsnummer: **0 038 063**
B1

(12)

# EUROPÄISCHE PATENTSCHRIFT

(45) Veröffentlichungstag der Patentschrift:
01.02.84

(51) Int. Cl.³: **F 16 L 59/02**, G 21 C 11/08

(21) Anmeldenummer: 81102821.6

(22) Anmeldetag: 13.04.81

(54) Wärmedämmkassette.

(30) Priorität: 15.04.80 DE 3014453
10.03.81 DE 3049871

(43) Veröffentlichungstag der Anmeldung:
21.10.81 Patentblatt 81/42

(45) Bekanntmachung des Hinweises auf die Patenterteilung:
01.02.84 Patentblatt 84/5

(84) Benannte Vertragsstaaten:
AT BE CH DE FR GB IT LI LU NL SE

(56) Entgegenhaltungen:
EP - A - 0 011 196
DE - A - 2 429 986
DE - A - 2 551 219
DE - A - 2 747 663
DE - B - 1 225 929
DE - C - 357 183
DE - C - 883 690
FR - A - 1 184 877
FR - A - 2 292 181
FR - A - 2 309 019
GB - A - 831 523
US - A - 3 336 951
US - A - 3 804 438

(73) Patentinhaber: KRAFTWERK UNION
AKTIENGESELLSCHAFT, Wiesenstrasse 35,
D-4330 Mülheim (Ruhr) (DE)
Patentinhaber: Grünzweig + Hartmann Montage GmbH,
Westendstrasse 17, D-6700 Ludwigshafen/Rhein (DE)

(72) Erfinder: Fricker, Wolfgang-Peter, An der Quelle 23,
D-6713 Freinsheim (DE)
Erfinder: Scholz, Manfred, Zeiss-Strasse 8,
D-8520 Erlangen (DE)

(74) Vertreter: Mehl, Ernst, Dipl.-Ing. et al, Postfach 22 01 76,
D-8000 München 22 (DE)

Wärmedämmkassette

Die Erfindung bezieht sich auf eine Wärmedämmkassette gemäß Oberbegriff des Anspruchs 1.

Zu Dämmplatten verarbeitete Preßstoffe gemäß Gattungsbegriff sind z. B. unter dem Warenzeichen »Minileit« im Handel, vgl. z. B. Datenblatt »Technische Daten N 101, Schlüsselzahl 10.10.78 K« der Firma Grünzweig + Hartmann und Glasfaser AG, welche als rein anorganische, unbrennbare, feinporöse Platten mit einem ausgezeichneten Wärmedämmvermögen ausgeführt sind. Die Wärmeleitfähigkeit liegt niedriger als die der ruhenden Luft und ist darüber hinaus nur wenig temperaturabhängig. Selbst bei hohen Betriebstemperaturen sind nur geringe Dämmdicken erforderlich. Der bekannte Dämmstoff in Form von aus pulverförmigen $SiO_2$-Grundstoffen (pyrogene Kieselsäure) mit Verstärkungsfasern und Trübungsmittel gepreßten Platten läßt sich flächig gut auf Druck beanspruchen. Als Oberflächenschutz und der Formstabilität wegen bleibt die beim Pressen verwendete Glasgewebeumhüllung an der Oberfläche des Dämmstoffes erhalten. Die bekannten Dämmstoffplatten lassen sich jedoch aufgrund ihrer Glasgewebeumhüllung nicht befriedigend mechanisch nachbearbeiten, so daß sie vornehmlich von vornherein in den erforderlichen Einbaumaßen hergestellt werden.

Es ist durch die DE-A-2 747 663 auch bereits ein aus einem Gemisch aus pyrogener Kieselsäure, einem Trübungsmittel und Mineralwolle bestehender und durch Pressen verdichteter Formkörper bekannt, der eine ausreichende Abriebfestigkeit aufweist, ohne daß dazu Metall- oder Kunststoff-Formen oder Gewebesäcke als Außenumhüllung benutzt zu werden brauchen und ohne daß eine Bindung des gepreßten Formkörpers selbst durch ein gesondertes Bindemittel erforderlich ist. Der Formkörper weist hierzu eine Beschichtung auf, deren Gemisch aus einem anorganischen Bindemittel, mineralischen Füllstoffen, mineralischen Pigmenten und Mineralwolle besteht und welche durch einen Spritz- und/oder Tauchvorgang aufgebracht ist.

Es ist weiterhin durch die US-A-3 804 438 bekannt, Rohrleitungen mit einer polygonförmigen Dämmkörper-Umhüllung zu ummanteln, deren einzelne Dämmkörper-Elemente einen trapezförmigen Querschnitt haben, wobei die trapezförmigen Dämmkörper-Elemente zwischen einer metallischen Außenhaut und einer ebenfalls metallischen, im Querschnitt etwa sägezahnförmigen Innenhaut angeordnet sind und ihre polygonförmige Gesamtstruktur durch Herumlegen der im Ursprungszustand zunächst ebenen Anordnung aus Außenhaut, Innenhaut und Dämmkörper-Elementen um den Außenumfang der Rohrleitung — unter Einfügung von Abstandshaltern — erhalten. Soweit in der genannten US-A-3 804 438 Angaben über das Wärmedämm-Material gemacht sind, ist von Plastikschaumstoff die Rede. Ein solches Dämm-Material ist zur Wärmedämmung von Komponenten oder Rohrleitungen in konventionellen oder insbesondere in Kernkraftanlagen nicht geeignet, weil es der Temperaturbelastung dort nicht standhalten würde.

Schließlich ist es durch die FR-A-2 292 181 bekannt, Wärmedämmkassetten für Kernkraftanlagen zum Zwecke der Korrosionsverhinderung mit einer Außenhaut aus austenitischen Stahlfolien zu versehen. Das Wärmedämm-Material im Inneren der Kassetten wird dabei aus Metallfolien, Stahlwolle, Stahlgeflecht oder unter Umständen aus Isolationswolle auf der Basis von Silicium gebildet.

Der Erfindung liegt die Aufgabe zugrunde, eine Wärmedämmkassette gemäß Gattungsbegriff zu schaffen, mit der sich Bauteile, die im wesentlichen zylindrische Außenformen aufweisen, wie z. B. Rohrleitungen oder Druckbehälter, insbesondere in konventionellen oder kerntechnischen Anlagen, betriebssicher wärmedämmen lassen, wobei die Wärmedämmkassette im wesentlichen aus handelsüblich vorliegenden und auf der Basis von pyrogener Kieselsäure bestehenden Wärmedämmplatten gebildet sein soll.

Erfindungsgemäß wird die gestellte Aufgabe mit einer Wärmedämmkassette der eingangs genannten Art durch die im Kennzeichen des Anspruchs 1 angegebenen Maßnahmen gelöst.

Vorteilhafte Weiterbildungen sind in den Unteransprüchen 2 bis 11 beschrieben.

Im folgenden wird anhand der mehrere Ausführungsbeispiele darstellenden Zeichnung die Wärmedämmkassette nach der Erfindung noch näher erläutert.

Es zeigen in vereinfachter, schematischer Darstellung:

Fig. 1 perspektivisch im Ausschnitt die Zerteilung einer gepreßten Dämmplatte in einzelne trapezförmige Dämmleisten,

Fig. 2 in Seitenansicht die Zusammensetzung mehrerer Dämmleisten zu einem polygonförmigen Dämmkörpergebilde,

Fig. 3 eine einzelne Dämmleiste in Draufsicht,

Fig. 4 perspektivisch die durch Metallfolienkapselung der polygonförmigen Dämmkörpergebilde entstandenen schalenförmigen Wärmedämmkassetten,

Fig. 5 den Schnitt V-V der Metallfolienverbindung aus Fig. 4 vergrößert,

Fig. 6 in entsprechender Darstellung zu Fig. 5 ein zweites Beispiel der Metallfolienverbindung für die feuchtigkeitsdichte Kapselung bei einer Kassette nach Fig. 4,

Fig. 7 in entsprechender Darstellung zu Fig. 6 ein drittes Beispiel der Metallfolienverbindung für die genannte feuchtigkeitsdichte Kapselung nach Fig. 4,

Fig. 8 in entsprechender Darstellung zu Fig. 4 eine Wärmedämmkassette, bei der abweichend von Fig. 4 der Außenmantel nicht rund, sondern so wie der Innenmantel abgekantet ist,

Fig. 9 den Schnitt IX-IX aus Fig. 8 vergrößert im Detail, d. h. die Ausbildung der Längsnahtverbindung,

Fig. 10 perspektivisch im Ausschnitt einen Schnellspannverschluß als Verbindungselement im Längsnahtbereich,

Fig. 11 eine Blechschraube als Verbindungselement im Längsnahtbereich in einem Querschnitt und

Fig. 12 im Aufriß zum Teil im Schnitt eine in einem Kernkraftwerk verlaufende Rohrleitung, die im Bereich einer Ausschlagsicherung von einer Wärmedämmkassette nach der Erfindung umschlossen und im übrigen mit einer konventionellen zum Teil demontierbaren, zum Teil fest installierten Wärmedämmung versehen ist.

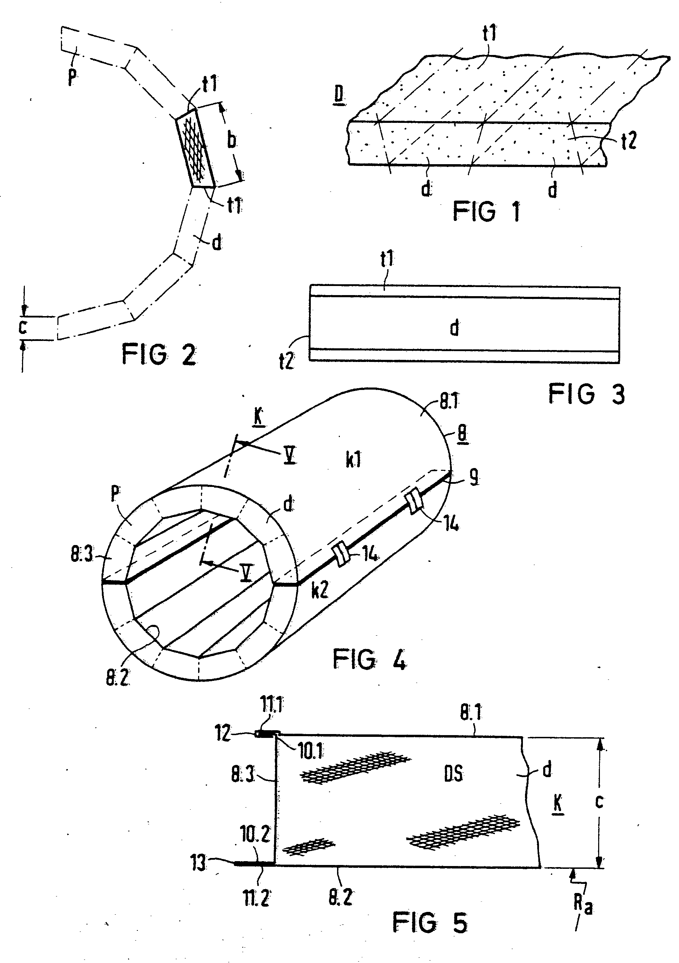

Gemäß Fig. 1 wird die Dämmplatte D, die in bekannter Weise aus einem Preßstoff aus pyrogener Kieselsäure, Verstärkungsfasern und Trübungsmittel besteht und mindestens eine Rohdichte von 250 kg/m² aufweist, zur Herstellung einer Wärmedämmung für gekrümmte Oberflächen aufweisende Bauteile in im Querschnitt etwa trapezförmige Dämmleisten d zertrennt, deren längsseitige Trennflächen t1 rechteckig und deren stirnseitige Trennflächen t2 trapezförmig sind. Nach dem Trennen, das zweckmäßig mit einer Bandsäge geschieht, werden die Trennflächen t1, t2 vorteilhaft mit Wasserglas eingestrichen, wodurch die stoßempfindlichen Schnittkanten gegen Abbröckeln geschützt sind.

Fig. 2 zeigt, daß die einzelnen Dämmleisten d nach Fig. 3 mit ihren längsseitigen Trennflächen t1 zu polygonförmigen Schalenkörpern P aneinandergesetzt werden können. Dargestellt ist in Fig. 2 ein Halbschalengewölbe. Die mit Wasserglas eingestrichenen Trennflächen sind in Fig. 2 und 3 wieder mit t1 und t2 bezeichnet. Zum Heraustrennen von Durchführungsbohrungen (nicht dargestellt) werden Stichsägen verwendet. Aus Fig. 1 in Verbindung mit Fig. 2 wird deutlich, daß durch die abwechselnde Neigung der Trennflächen t1 nach der einen oder anderen Seite die Dämmleisten d mit gleichem Querschnitt, aber praktisch ohne Abfall bzw. Verschnitt hergestellt werden können, aus welchen Dämmleisten dann der polygonförmige Schalenkörper P zusammengesetzt werden kann, dessen einzelne Dämmleisten d die Breite b und die Dämmdicke c aufweisen.

Gemäß Fig. 4 ist der polygonförmige Schalenkörper P mit einer feuchtigkeitsdichten Metallfolien-Kapselung 8 versehen, so daß eine im wesentlichen hohlzylindrische Wärmedämmkassette K gebildet ist, die insbesondere zur Wärmedämmung von Rohrleitungen dienen kann und zwecks de- und remontabler Ausführung durch eine axiale Teilfuge 9 in zwei halbschalenförmige Teilkassetten k1, k2 unterteilt ist, wobei die Teilkassetten im Bereich der Teilfuge 9 durch Spannelemente 14, wie weiter unten noch erläutert, zusammengehalten werden. Für die Wärmedämmung von Rohrleitungen und Komponenten in Kraftwerkanlagen, insbesondere in Kernkraftanlagen, empfiehlt sich eine Kapselung aus austenitischen (nichtrostenden) Stahlfolien 8.

Die in Fig. 4 dargestellte Wärmedämmkassette K weist einen runden Außenblechmantel 8.1, einen polygonal gekanteten, vorzugsweise auch den Teilfugenbereich 9 überdeckenden Innenblechmantel 8.2 sowie ringförmige Stirnbleche 8.3 auf. Letztere sind an ihrem Außenumfang rund und an ihrem Innenumfang polygonal zugeschnitten, wobei jedoch entsprechende abgewinkelte Randüberstände 10.1 und 10.2 am Außen- und Innenumfang der Stirnbleche 8.3 vorgesehen sind (siehe Fig. 5). Die äußeren Randüberstände 10.1 sind mit einem entsprechenden Randüberstand 11.1 des Außenblechs 8.1 durch eine Falzverbindung in Form einer umlaufenden sogenannten Kastensicke 12 feuchtigkeitsdicht und vorzugsweise auch gasdicht verbunden, wobei ein verlängerter Schenkel des Randüberstandes 11.1 den Randüberstand 10.1 U-förmig umgreift und mit diesem verquetscht ist. Der Randüberstand 10.2 am Innenumfang des Stirnbleches 8.3 ist mit dem ihn umfassenden Randüberstand 11.2 des Außenbleches 8.2 durch eine Rollenschweißnaht 13 feuchtigkeits- und bevorzugt auch gasdicht verbunden. Mit c ist in Fig. 5 wieder die Dämmdicke der Dämmriegel d bzw. des Dämmstoffes DS in Richtung des Wärmegefälles bezeichnet, mit $R_a$ der Außendurchmesser des nicht dargestellten zu dämmenden Rohres. Aus Gründen der besten Formstabilität der Wärmdämmkassette K bei möglichst geringer Wärmeleitung der Kapselung 8 ist es vorteilhaft, die Stärke des Außenblechmantels 8.1 größer als die des Innenblechmantels 8.2 und letztere wieder größer als die Stärke der Stirnbleche 8.3 zu bemessen. Bei einer austenitischen Stahlblechkapselung waren günstige Werte für die Stärke des Außenblechmantels 8.1 abhängig von seinem Durchmesser 0,8 bis 1 mm, für die Stärke des Innenblechmantels 8.2 etwa 0,6 mm und für die Stärke der Stirnbleche 8.3 etwa 0,4 mm. Die feuchtigkeitsdichte Verbindung zwischen dem Stirnblech 8.3 und dem Außen- und Innenblechmantel 8.1, 8.2 an der aus Fig. 4 nicht erkennbaren anderen Stirnseite der Wärmedämmkassette K ist sinngemäß zu der dargestellten ausgeführt.

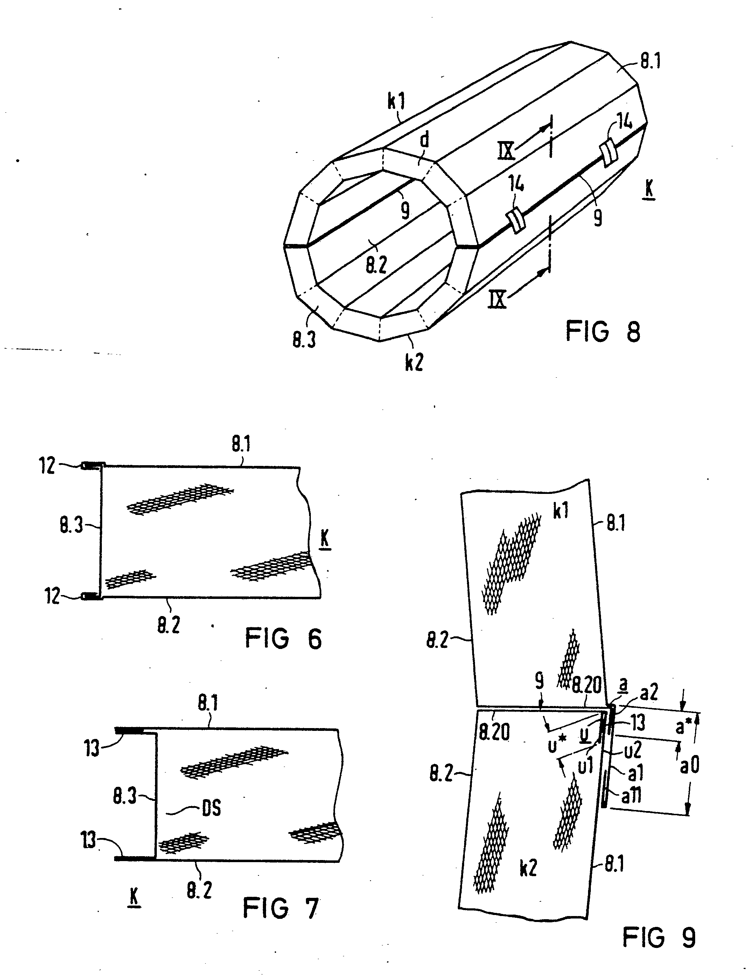

Fig. 6 zeigt, daß diese Verbindung nicht nur am Außenmantel 8.1, sondern auch am Innenmantel 8.2 als Kastensicke 12 ausgeführt sein kann. Fig. 7 zeigt eine weitere Variante mit Rollenschweißnahtverbindung 13 nicht nur am Innenblechmantel 8.2, sondern auch am Außenblechmantel 8.1.

Die Wärmedämmkassette K nach Fig. 8 unterscheidet sich von derjenigen nach Fig. 4 dadurch, daß nicht nur der Innenblechmantel 8.2, sondern auch der Außenblechmantel 8.1 polygonal gekantet ist. Diese Ausführung empfiehlt sich bei kleineren Durchmessern der zu dämmenden Rohre, damit dann Lufträume durch Zwickelbildung zwischen den Dämmleisten d und dem Innenumfang des Außenmantels 8.1 nicht entstehen können.

Die zu Fig. 8 gehörige Fig. 9 zeigt, daß die Längsnahtverbindung der im Teilfugenbereich 9 aneinanderliegenden Teilkassetten k1, k2 für die eine Teilkassette k2 — in diesem Falle als Unterkassette bezeichnet — als einfache geschweißte, insbesondere rollengeschweißte, Überlappung u mit der Überlappungsbreite u* ausgeführt ist. Der eine Überlappungsschenkel u1 ist eine abgewinkelte Verlängerung einer den Teilfugenbereich 9 überstreichenden Abkantung 8.20 des Innenblechmantels 8.2, der andere Überlappungsschenkel u2 wird vom Außenblechmantel 8.1 gebildet. Die Rollenschweißnaht ist wieder mit 13 bezeichnet. Die Längsnahtverbindung a der anderen Teilkassette k1 — in diesem Falle als Oberkassette bezeichnet, da sie die Unterkassette k2 übergreift — ist als abgewinkelte, mit ihrem Außenschenkel a1 die Längsnahtverbindung u1, u2 der Unterkassette k2 überdeckende, gleichfalls geschweißte, insbesondere rollengeschweißte, Überlappung ausgeführt, wobei die Außenschenkel-Breite a0 des Überlappungsschenkels a1 des Außenblechmantels 8.1, wie dargestellt, ein Mehrfaches größer als die Überlappungsbreite a* ist. Der Überlappungsschenkel a1 ist an seinem freien Ende mittels der Abbiegung a11 umgelegt, so daß sich eine großflächige Anlage des Überlappungsschenkels a1 an der Unterkassette k2 ergibt. Auch bei der Längsnahtverbindung a1, 12 der Oberkassette k1 ist der Überlappungsschenkel a2 eine abgewinkelte Verlängerung einer den Teilfugenbereich 9 überstreichenden Abkantung 8.20 des Innenblechmantels 8.2.

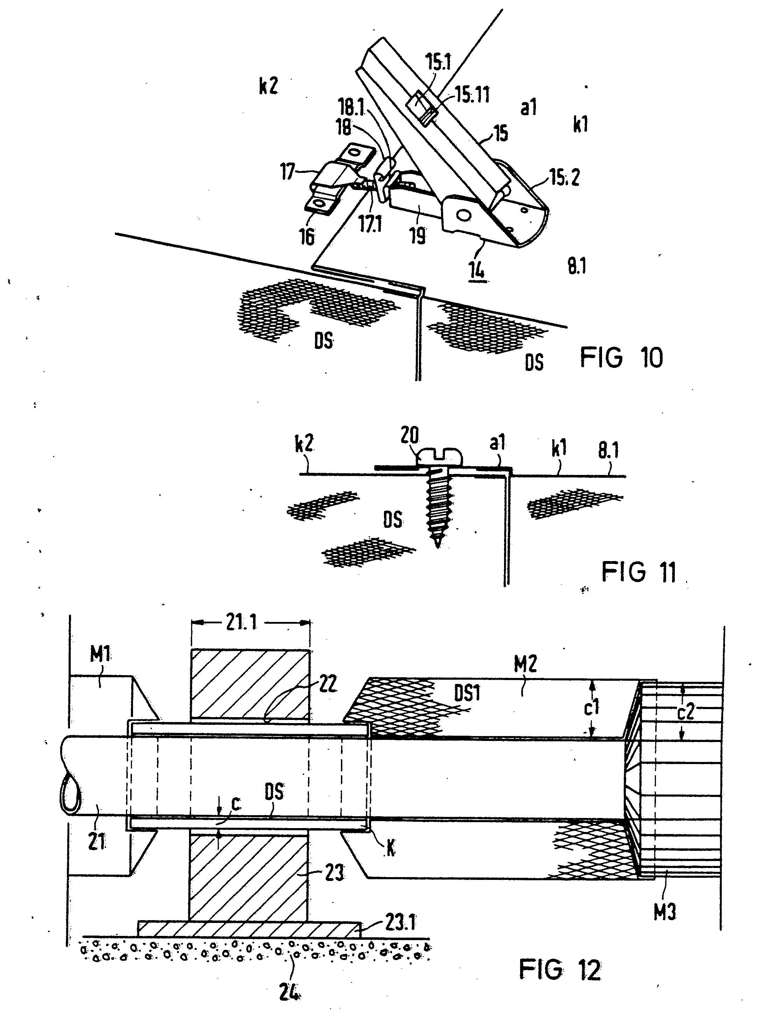

Eine Ausführung der in Fig. 4 und 8 mit 14 bezeichneten Verschlüsse, und zwar einen sogenannten Schnellspannverschluß, zeigt Fig. 10. Im Bereich des Überlappungsschenkels a1 des Außenblechmantels 8.1 einer Außenkassette ist ein Schwenkriegel 15 mit Klinkenaussparung 15.1 schwenkbar an einer Riegelhalterung 15.2 gelagert. Im gegenüberliegenden benachbarten Bereich der Unterkassette ist eine Lasche 16 befestigt, an der ein Haken 17 mit einer auf einem Gewindeschaft 17.1 verstellbaren Klinke 18 eingehängt ist. 19 sind Führungswangen für den Schwenkriegel 15 und die Klinke 18. Letztere rastet, da sie elastisch deformierbar ist, beim Schließen des Riegels 15 mit ihrer Nase 18.1 hinter die Kante 15.11 der Klinkenaussparung 15.1.

Fig. 11 zeigt im Schnitt für den gleichen Längsnahtverbindungsbereich zwischen Unterkassette k2 und Oberkassette k1 eine Blechschraube 20, welche den Außenschenkel a1 des Außenmantels 8.1 der Oberkassette k1 und den Außenmantel 8.1 der Unterkassette k2 in einer Bohrung durchdringt. Die Längsnahtverbindung nach Fig. 17 ist für kleinere Kassetten mit geringeren Verspannkräften bzw. für solche Kassetten geeignet, wo es auf eine häufige De-und Remontage nicht ankommt.

Zwecks gleichartiger Ausbildung der Teilkassetten k1, k2 sind diese abwechselnd in ihrem einem Teilfugenbereich als Oberkassette und in ihrem anderen Teilfugenbereich als Unterkassette ausgebildet. So ist für den in Fig. 8 dargestellten rechten Teilfugenbereich 9 gemäß Schnitt nach Fig. 9, wie erläutert, die Teilkassette k1 die Oberkassette und die Teilkassette k2 die Unterkassette. Für den in Fig. 8 links dargestellten Teilfugenbereich 9 wäre das Umgekehrte der Fall, d. h. hier ist k2 die Oberkassette und k1 die Unterkassette, was man sich leicht dadurch verdeutlichen kann, daß man das Bild 9 auf den Kopf stellt und die Bezeichnungen k1 und k2 vertauscht.

In Fig. 12 ist die Rohrleitung 21 z. B. die von einem Dampferzeuger kommende Frischdampfleitung, die im rohraxialen Bereich 21.1 die Bohrung 22 eines Wegbegrenzers 23 für eine Ausschlagsicherung durchdringt, der seinerseits mit einem Fußteil 23.1 am Fundament oder einer Stahlbetonwand 24 verankert ist. Im rohraxialen Bereich 21.1 der Ausschlagsicherung 23 und nach beiden Achsrichtungen etwas darüber hinausgehend ist die Rohrleitung 21 von einer Wärmedämmkassette K, wie sie vorstehend anhand der Fig. 4 und 5 sowie 6 bis 11 beschrieben wurde, umgeben. Die dieser Wärmedämmkassette K axial benachbarten und mit ihr verzahnten, die Rohrleitung 21 umfassenden Wärmedämmkassetten M1 und M2, wobei die Kassette M2 de- und remontabel ist, sind ebenfalls mit austenitischem Stahlblech gekapselt, enthalten jedoch einen konventionellen Dämmstoff DS1 aus Mineralwolle, dessen Rohdichte um ein Vielfaches kleiner ist als diejenige des Dämmstoffes DS der Kassette K. Um die gleiche Wärmedämmung zu erzielen, ist also die Dämmdicke c1 der Kassetten M1 und M2 um ein Vielfaches größer als die Dämmdicke c der Kassette K. Entsprechendes gilt für die Dämmdicke c2 einer axial zur Kassette M2 fest installierten Wärmedämmung M3. Es ist gefunden worden, daß durch die Verwendung des hochwertigen Dämmstoffes DS je nach Temperaturbereich nur die Hälfte bis 1/6 der Dämmdicke im Vergleich zur konventionellen Wärmedämmung der Kassette M1, M2 benötigt wird. Dadurch, daß der Dämmstoff DS eine hohe Druckfestigkeit aufweist, kann die mit ihm versehene Kassette K die Kraftübertragung im Bereich der Ausschlagsicherung vom Rohr 21 zum Wegbegrenzer 23 übernehmen. Somit beträgt der Flugweg der ausschlaggesicherten Rohrleitung 21 bzw. eines anderen auf diese Weise ausschlaggesicherten Anlageteils nahezu Null. Durch die Verwendung des kompakten Dämmstoffes DS entfällt für die damit hergestellten Wärmedämmsysteme die Unterkonstruktion, die bei einer normalen Wärmedämmung mit weniger kompaktem Dämmstoff aus Mineralwolle fester Bestandteil ist. Damit werden zusätzliche Wärmebrücken vermieden und der Wärmestrom weiter begrenzt. Die Wärmedämmkörper bzw. Wärmedämmkassetten nach der Erfindung erhöhen die Anlagensicherheit besonders bei druckmittelführenden Rohrleitungen und Komponenten, insbesondere in Kraftwerken und Kernkraftwerken, aus folgendem Grund: Würde der Dämmstoff (bei einem an sich unwahrscheinlichen größeren Leck) durch einen Wasser- oder Dampfstrahl, der die Wärmedämmung beschädigt, ausgespült, so könnten die Siebe der Rückkühlsysteme nicht verstopft werden (wegen der geringen Größe der Dämmstoffpartikel im μ-Bereich. Weiterhin ist noch auf folgende Vorteile der mit dem erfindungsgemäßen Dämmstoff ausgerüsteten Wärmedämmsysteme hinzuweisen: Verminderung der Wärmeverluste bzw. der Wärmeeinstrahlung in die Anlagengebäude, dadurch Energieeinsparung und Entlastung der Umwelt. Der Beton bzw. Stahl kann nun auch bei beengten Platzverhältnissen wirksam vor Überhitzung geschützt werden. Durch die beschriebene feuchtigkeitsdichte Kassettenbauweise werden die Probleme der Staubentwicklung und der Dekontaminierung bei Kernkraftanlagen gelöst. Darüber hinaus ist es möglich, die Wärmedämmung mit äußerst wenig Zeitaufwand zu de- und remontieren. Auf die weitgehende Unempfindlichkeit des Wärmedämmsystems gegen mechanische Belastungen wurde bereits eingegangen. Je nach Einsatz des Dämmstoffes kann ein Wärmedämmsystem nach der Erfindung auch eine Druckbeanspruchung von über 1000 N/cm² aushalten.

Im Rahmen der Erfindung liegt auch ein Aufbau von Wärmedämmkassetten, die aus mehr als zwei Teilkassetten bestehen. Dies ist insbesondere bei wärmezudämmenden Anlageteilen angezeigt, deren gekrümmte Oberflächen auf einem größeren Durchmesser liegen.

**Patentansprüche**

1. Wärmedämmkassette zur Ummantelung von im wesentlichen zylindrische Außenformen aufweisenden Bauteilen, wie z. B. Rohrleitungen oder Druckbehältern, insbesondere in konventionellen oder kerntechnischen Anlagen, unter Verwendung eines zu Dämmplatten verarbeiteten Preßstoffes auf der Basis von pyrogener Kieselsäure, Verstärkungsfasern und Trübungsmittel, dadurch gekennzeichnet, daß

a)  aus den Dämmplatten (D) geschnittene, im Querschnitt trapezförmige Dämmkörper-Elemente (d) zu einer polygonförmigen Dämmkörper-Schale (P) für die Wärmedämmkassette (K) zusammengesetzt sind, daß

b)  die polygonförmigen Schalenkörper (P) mit einer feuchtigkeitsdichten, aus austenitischen Stahlfolien bestehenden Kapselung (8) versehen sind und daß

c)  die rohrförmig ausgebildete Wärmedämmkassette (K) mindestens zwei Halbschalen-Teilkassetten (k1, k2) aufweist, welche aus einem runden oder polygonal gekanteten Außenblechmantel (8.1), einem runden oder polygonal gekanteten, auch den Teilfugenbereich überdeckenden Innenblechmantel (8.2) sowie ringförmigen Stirnblechen (8.3) bestehen, wobei eine feuchtigkeitsdichte Verbindung zwischen Außenblechmantel, Innenblechmantel und Stirnblechen der Teilkassetten (k1, k2) mittels Falz- oder Schweißverbindung (12, 13) hergestellt ist.

2. Wärmedämmkassette nach Anspruch 1, dadurch gekennzeichnet, daß die Dämmkörper-Elemente (d) im Bereich ihrer Trennflächen (t1, t2) mit Wasserglas eingestrichen sind.

3. Wärmedämmkassette nach Anspruch 1, dadurch gekennzeichnet, daß die Stärke des Außenblechmantels (8.1) größer als die des Innenblechmantels (8.2) und letztere größer als die der Stirnbleche (8.3) ist.

4. Wärmedämmkassette nach Anspruch 3, dadurch gekennzeichnet, daß die Stärke des Außenblechmantels (8.1) abhängig von seinem Durchmesser 0,8 bis 1 mm, die des Innenblechmantels (8.2) etwa 06 mm und die der Stirnbleche (8.3) etwa 0,4 mm beträgt.

5. Wärmedämmkassette nach einem der Ansprüche 1 sowie 3 oder 4, dadurch gekennzeichnet, daß die Längsnahtverbindung der im Teilfugenbereich (9) aneinanderliegenden Teilkassetten (k1, k2) für die eine Teilkassette (Unterkassette) als einfache geschweißte, insbesondere rollengeschweißte, Überlappung (u) mit einer ersten Überlappungsbreite (u*) ausgeführt ist und für die andere Teilkassette (Oberkassette) als abgewinkelte, mit ihrem Außenschenkel (a1) die Längsnahtverbindung der Unterkassette überdeckende, gleichfalls geschweißte, insbesondere rollengeschweißte, Überlappung (a) mit einer zweiten Überlappungsbreite (a*) ausgeführt ist, wobei die Außenschenkel-Breite (a0) des Außenblechmantels (8.1) größer, vorzugsweise um ein Mehrfaches größer als die erste Überlappungsbreite (u*) ist und der Außenschenkel (a1) als Träger von Längsnahtverbindungselementen (14) ausgebildet und an seinem Ende umgelegt ist.

6. Wärmedämmkassette nach Anspruch 5, gekennzeichnet durch Schnellspannverschlüsse (15, 16, 17) als Verbindungselemente mit einer Schwenkriegelhalterung im Längsnahtverbindungsbereich (a) als Oberkassette (k1) und einer Sperrklinkenhalterung (16, 17) im tangential angrenzenden Randbereich des Unterkassetten-Außenmantels (8.1).

7. Wärmedämmkassette nach Anspruch 5, gekennzeichnet durch Blechschrauben (20) als Verbindungselemente (14), welche den Außenschenkel (a1) der Oberkassette (k1) und den darunterliegenden Randbereich des Unterkassetten-Außenmantels (8.1) durchdringen.

8. Wärmedämmkassette nach einem der Ansprüche 1 sowie 3 bis 7, dadurch gekennzeichnet, daß die Teilkassetten (k1, k2) zwecks untereinander gleichartiger Ausbildung abwechselnd in ihrem einen Teilfugenbereich (9) als Oberkassette und in ihrem anderen Teilfugenbereich (9) als Unterkassette bzw. umgekehrt ausgebildet sind.

## Claims

1. A thermally insulating casing for encasing components which are essentially cylindrical in their external shape, such as, for example, pipelines or pressure containers, in particular in conventional or nuclear installations, using moulding material which can be processed to form insulating plates and having a basis of pyrogenic silicic acid, reinforcing fibres and opacifiers, characterised in that

a) insulator elements (d) which have been cut from the insulating plates (D) and which are trapeziumshaped in cross-section, are assembled to form a polygonal insulator shell (P) for the thermally insulating casing (K); that

b) the polygonal shell bodies (P) are provided with a moisture-proof covering (8) made of austenitic steel foils; and that

c) the thermally insulating casing (K) of tubular form comprises at least two half-shell sub-casings (k1, k2) which consist of a round or polygonallyangled outer sheet-metal jacket (8.1), a round or polygonally-angled inner sheet-metal jacket (8.2) which also covers the junction zone, and annular metal end sheets (8.3), a moisture-proof connection between the outer sheet-metal jacket, the inner sheet-metal jacket and the end sheets of the sub-casings (k1, k2) being established by means of a folded or welded connection (12, 13).

2. A thermally insulating casing according to Claim 1, characterised in that the insulator elements (d) are coated with water glass in the region of their surfaces of separation (t1, t2).

3. A thermally insulating casing according to Claim 1, characterised in that the thickness of the outer sheet-metal jacket (8.1) is greater than that of the inner sheet-metal jacket (8.2), and the thickness of the latter is greater than that of the metal end sheets (8.3)

4. A thermally insulating casing according to Claim 3, characterised in that the thickness of the outer sheet-metal jacket (8.1) is from 0.8 to 1 mm depending upon its diameter, that of the inner sheet-metal jacket (8.2) is about 0.6 mm, and that of the end sheets (8.3) is about 0.4 mm.

5. A thermally insulating casing according to one of Claims 1 and 3 or 4, characterised in that the longitudinal joint connection of the sub-casings (k1, k2) which abut against one another in the junction zone (9) is formed by a simple, welded (in particular roll-welded), overlap (u) having a first overlap width (u*), in the case of the one sub-casing (lower casing), and in the case of the other sub-casing (upper casing), by an angular likewise welded, and in particular rollwelded, overlap (a) having a second overlap width (a*), the outer side piece (a1) of which covers the longitudinal joint connection of the lower casing, wherein the outer width (a0) of the outer side piece of the outer sheet-metal jacket (8.1) exceeds the first overlap width (u*), preferably by a multiple thereof, the outer side piece (a1) serving as a carrier for longitudinal joint connection elements (14) and being turned over at its end.

6. A thermally insulating casing according to Claim 5, characterised by the use of quick-clamping fasteners (15, 16, 17) as connecting elements, with a pivotal arm support in the longitudinal joint connection zone (a) of the upper casing (k1), and a catch support (16, 17) in the tangentially adjoining edge region of the outer jacket (8.1) of the lower casing.

7. A thermally insulating casing according to Claim 5, characterised by self-tapping screws (20) which serve as connecting elements (14) which penetrate through the outer side piece (a1) of the upper casing (k1) and the underlying edge region of the outer jacket (8.1) of the lower casing.

8. A thermally insulating casing according to one of Claims 1 and 3 to 7, characterised in that, in order that they may be similar in design, the sub-casings (k1, k2) are alternately designed as the upper casing in their one joint zone (9) and as the lower casing in their other joint zone (9), and vice versa.

## Revendications

1. Enveloppe destinée à l'isolation thermique pour envelopper des pièces présentant des formes extérieures sensiblement cylindriques, comme par exemple des conduits tubulaires ou des récipients sou pression, notamment dans des installation classiques ou de génie nucléaire, utilisant une matière comprimée, transformée en plaques calorifuges, à base d'acide silicique pyrogene, de fibres de renfort et d'agent opacifiant, caractérisée en ce que:

a) des éléments formant des corps calorifuges (d), de section transversale de forme trapézoïdale, découpés dans des plaques calorifuges (D) sont assemblés en une coquille formant corps calorifuge (P) pour l'enveloppe destinée à l'isolation thermique (K),

b) les corps en forme de coquille (P) polygonale sont munis d'un blindage (8) étanche à l'humidité et constitué de feuilles d'acier austénitique, et

c) les enveloppes destinées à l'isolation thermique (K), qui sont constituées sous forme de tube, présentent au moins deux enveloppes partielles (k1, k2) en hémi-coquilles, qui sont constituées d'une surface latéale extérieure en tôle (8.1) à bord round ou polygonal, d'une surface latérale intérieure en tôle (8.2) à bord round ou polygonal, recouvrant aussi la zone des joints d'assemblage, ainsi que de tôles frontales (8.3) de forme annulaire, une liaison étanche à l'humidité étant réalisée entre la surface latérale extérieure en tôle, la surface latérale intérieure en tôle et les tôles frontales des enveloppes partielles (k1, k2) au moyen d'une liaison par agrafage ou par soudage (12, 13).

2. Enveloppe destinée à l'isolation thermique suivant la revendication 1, caractérisée en ce que les éléments formant des corps calorifuges (d) sont enduits de verre soluble dans la zone de leur surface de séparation (t1, t2).

3. Enveloppe destinée à l'isolation thermique suivant la revendication 1, caractérisée en ce que l'épaisseur de la surface latérale extérieure en tôle (8.1) et cette dernière épaisseur est plus grande que celle des tôles frontales (8.3).

4. Enveloppe destinée à l'isolation thermique suivant la revendication 3, caractérisée en ce que l'épaisseur de la surface latérale extérieure en tôle (8.1) est comprise en fonction de son diamètre entre 0,8 et 1 mm, celle de la surface latérale intérieure en tôle (8.2) est égale à 0,6 mm environ et celle des tôles frontales (8.3) à 0,4 mm environ.

5. Enveloppe destinée à l'isolation thermique suivant l'une des revendications 1 ainsi que 3 ou 4, caractérisée en ce que la liaison par soudure longitudinale des enveloppes partielles (k1, k2) disposées l'une contre l'autre dans là zone des joints d'assemblage (9) est, pour l'une des enveloppes partielles (enveloppe inférieure), exécutée sous forme d'une simple partie à recouvrement (u) soudée, notamment à la molette, ayant une première largeur de recouvrement (u*) et, pour l'autre enveloppe partielle (enveloppe supérieure), exécutée sous forme d'une partie à recouvrement (a), également soudée, notamment soudée 'a la molette, coudée, recouvrant par sa branche extérieure (a1) la liaison de soudure longitudinale de l'enveloppe inférieure et ayant une seconde largeur de recouvrement (a*), la largeur (a0) de la branche extérieure de la surface extérieure en tôle (8.1) étant plus grande, de préférence de plusieurs fois, que la première largeur de recouvrement (u*) et la branche extérieure (a1) étant agencée en support d'éléments de soudure longitudinale (14) et repliée à son extrémité.

6. Enveloppe destinée à l'isolation thermique suivant la revendication 5, caractérisée par des fermetures à serrage rapide (15, 16, 17) servant d'éléments de liaison, et ayant une pièce de fixation d'un dispositif de verrouillage monté pivotant dans la zone de liaison par soudure longitudinale (a) de l'enveloppe supérieure (k1) et une pièce de fixation du cliquet de blocage (16, 17) dans la zone marginale tangente adjacente de la surface latérale extérieure de l'enveloppe inférieure (8.1).

7. Enveloppe destinée à l'isolation thermique suivant la revendication 5, caractérisée par des vis à tôle (20) servant d'éléments de liaison (14), qui traversent l'aile extérieure (a1) de l'enveloppe supérieure (k1) et la région marginale sous-jacente de la surface latérale extérieure (8.1) de l'enveloppe inférieure.

8. Enveloppe destinée à l'isolation thermique suivant l'une des revendications 1 ainsi que 3 à 7, caractérisée en ce que les enveloppe partielles (k1, k2) sont agencées, en vue d'avoir une structure de type identique, alternativement en enveloppe supérieure dans l'une de leurs zone des joints d'assemblage (9) et en enveloppe inférieure dans l'autre zone des joints d'assemblage (9) ou inversement.

FIG 1

FIG 2

FIG 3

FIG 4

FIG 5

0 038 063

FIG 8

FIG 6

FIG 7

FIG 9

11

FIG 10

FIG 11

FIG 12